# EUROPEAN PATENT APPLICATION

(11) **EP 4 530 482 A1**
(43) Date of publication of application: **02.04.2025**
(21) Application number: 23200877.1
(22) Date of filing: 29.09.2023
(51) Int. Cl.: F16B 5/02, F16B 11/00

(54) **A TOLERANCE COMPENSATION SYSTEM AND A METHOD FOR JOINING A FIRST COMPONENT AND A SECOND COMPONENT**

(71) Applicant: Motherson Innovations Deutschland GmbH, 70327 Stuttgart (DE)
(72) Inventor: Szilagyi, Csaba, 70327 Stuttgart (DE)

(57) **Abstract**

The disclosure relates to a tolerance compensation system (200) for joining a first component (102) and a second component (104), the tolerance compensation system (200) comprising: a compensator housing (202) disposed on the first component (102), wherein the compensator housing (202) comprises a wall (204), a stub end (206) and a bolt end (208), wherein the stub end (206) is configured to fix the first component (102) with the compensator housing (202), and the bolt end (208) has a hole (210) for inserting a swimming bolt (214) inside the compensator housing (202); the swimming bolt (214) comprising: body (216) having a first surface (216a) and a second surface (216b), wherein the body (216) of the swimming bolt (214) is configured to be inserted inside the hole (210) of the compensator housing (202) forming a seal between the body (216) and the compensator housing (202), and wherein the second surface (216b) of the swimming bolt (214) is configured to abut the second component (104), ahead portion (218) configured to sealably touch the wall (204) of the compensator housing (202), and a threaded hole (222); and a screw (226) having external threads (230) configured to fix the second component (104) and the swimming bolt (214), wherein a glue tank (236) filled with glue (238) or a glue (238) is provided in the threaded hole (222) of the swimming bolt (214), wherein the glue (238) is configured to be filled into a space 221, and and wherein a gap (G) is maintained for compensating tolerance between the first component (102) and the second component (104).

## Description

The disclosure relates to a tolerance compensation system. More particularly, the disclosure relates to tolerance compensation system for joining components of a display module in a vehicle. The disclosure further relates to a method for joining components of a display module.

Generally, display systems are used to display various views of the surrounding captured from one or more cameras mounted on the vehicle to assist the driver in driving the vehicle. Such display systems include a display panel which is mounted with tolerance compensation for maintaining flatness of the display panel, which is important for obtaining a clear view on the display panel.

In conventional tolerance compensation systems such as nut and bolt arrangement such as disclosed in EP1304489 B1. The tolerance compensation system disclosed in EP1304489 B1 includes a sleeve that compensates between two components which are bolted together. The sleeve is fitted on the bolt and has an unthreaded section at the base which holds the sleeve on and allows it to rotate with the bolt. It also has an external thread, so that it can be screwed into the nut, and an internal thread, allowing it to be fixed in position by tightening the bolt. In this tolerance compensation arrangement there exists a resultant axial force in the system which can damage the display panel which is generally sensitive and fragile. Thus, there is a need for a tolerance compensation system in which there is no resultant axial force.

It is an object of the present disclosure to provide a tolerance compensation system for joining a first component and a second component which overcomes the drawbacks as described herein. It is also an object of the present disclosure to provide a tolerance compensation system which does not damage the display panel due to the presence of axial forces in the system. It is also an object of the present disclosure to provide a method for joining a first component and a second component with tolerance compensation.

This object is achieved by the features of claims 1 and 11. Embodiments of the tolerance compensation system and the method of joining a first component and a second component with tolerance compensation according to the present disclosure are described in claims 2 to 11 and 12 to 15.

Thus, the present disclosure provides a tolerance compensation system for joining a first component and a second component, the tolerance compensation system comprising:
- a compensator housing disposed on the first component, wherein the compensator housing comprises a wall, a stub end and a bolt end, wherein the stub end is configured to fix the first component with the compensator housing, and the bolt end has a hole for inserting a swimming bolt inside the compensator housing;
- the swimming bolt comprising:
   ∘ a body having a first surface and a second surface, wherein the body of the swimming bolt is configured to be inserted inside the hole of the compensator housing forming a seal between the swimming bolt and the compensator housing, and wherein the second surface of the swimming bolt is configured to abut the second component,
   ∘ a head portion configured to sealably touch the wall of the compensator housing, and
   ∘ a threaded hole; and
- a screw having external threads configured to fix the second component and the swimming bolt,
wherein a glue tank filled with glue or a glue is provided in the threaded hole of the swimming bolt, wherein the glue is configured to be filled into a space, and wherein a gap is maintained for compensating tolerance between the first component and the second component.

The compensator housing of the present disclosure has an advantage that there is no resultant axial force present between the first component and the second component due to the presence due to the presence of glue which acts as a joining element between the first component and the second component. This way the resultant axial force is eliminated between the first component and the second component. This ensures protection of display panel mounted on the first component from damage due to the elimination of resultant axial force. The gap is maintained between the first component and the second component which compensates the tolerance between the first component and the second component. This ensures flatness of the first component on which the display panel is mounted. This ensures clear view on the display. Due to this, the vibration effect on the display panel may also be minimized.

In an embodiment, the wall of the compensator housing has at least one groove and the swimming bolt has at least one protrusion positioned on the head portion, wherein the at least one protrusion of the swimming bolt is configured to be inserted in the at least one groove of the compensator housing.

In an embodiment, the swimming bolt comprises at least one channel configured between the threaded hole and the first surface of the swimming bolt.

In an embodiment, the glue is configured to flow through the at least one channel and form an adhesive joint between the swimming bolt and the compensator housing.

In an embodiment, the movement of the first component and the second component is restricted by fixing the first component and the second component on a supporting jig.

In an embodiment, the first component comprises at least one centering part configured to be inserted in at least one centering hole of the second component for restricting the movement of the first component and the second component.

In an embodiment, the tolerance compensation system comprises a second glue material disposed between the swimming bolt and the compensator housing.

In an embodiment, the screw comprises: a body having length, and a head having a tool groove, wherein the tool groove of the screw is configured to receive a screwing tool.

In an embodiment, the head of the screw is configured to fix the second component and the swimming bolt when the screw is tightened into the swimming bolt.

In an embodiment, the screw is configured to compress and push the glue into the space when tightened.

In an embodiment, the first component has at least one hole for disposing the compensator housing with the first component.

In an embodiment, the second component has at least one hole in which the screw is inserted for fixing the second component with the swimming bolt.

The present disclosure also provides a method of joining a first component and a second component with tolerance compensation, wherein the method comprises:
- disposing a compensator housing on the first component;
- inserting a swimming bolt inside a hole of the compensator housing,
- placing the second component on a first surface of the swimming bolt, wherein the swimming bolt has a threaded hole, and wherein a glue tank having glue or a glue is placed inside the threaded hole of the swimming bolt;
- inserting a screw inside the threaded hole of the swimming bolt and tightening the screw;
- bursting the glue tank and compressing the glue or compressing the glue by the screw when the screw is tightened inside the threaded hole of the swimming bolt ;
- allowing glue to flow through at least one channel configured within the swimming bolt to fill a space between the swimming bolt and the compensator housing;
- curing the glue to obtain an adhesive joint between the swimming bolt and the compensator housing,
   wherein a gap (G) is maintained for compensating tolerance between the first component and the second component.

In an embodiment, the method comprises providing a supporting jig which provides rigidity to the first component, the compensator housing, the swimming bolt and the second component during the curing step.

In an embodiment, the method further comprises step of providing a second glue material between the swimming bolt and the compensator housing.

Other aspects, advantages, and salient features of the present disclosure will become apparent to those skilled in the art from the following detailed description, which taken in conjunction with the annexed figures, discloses exemplary embodiments of the disclosure, wherein:
- Fig. 1:: illustrates a perspective view of a display system according to an embodiment of the present disclosure;
- Fig. 2:: illustrates a top view of the display system according to an embodiment of the present disclosure;
- Fig. 3:: illustrates an exploded view of the display system according to an embodiment of the present disclosure;
- Fig. 4:: illustrates a front view of the display system according to an embodiment of the present disclosure;
- Fig. 5: illustrate a sectional view of a section B-B in figure 2 illustrating a tolerance compensation system according to the present disclosure;
- Fig. 6: illustrates illustrate a sectional view of the section B-B in figure 2 illustrating the tolerance compensation system when assembled according to the present disclosure;
- Fig. 7a and 7b:: illustrate perspective view and bottom view of a compensator housing according to an embodiment of the present disclosure;
- Fig. 8a to 8c:: illustrate perspective views and top view of a swimming bolt according to an embodiment of the present disclosure;
- Fig. 9:: illustrates a front view of a screw according to an embodiment of the present disclosure; and
- Fig. 10:: illustrates an exploded view of the tolerance compensation system of figure 2 according to the present disclosure.

It is to be understood that the embodiments described are merely exemplary of the present disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

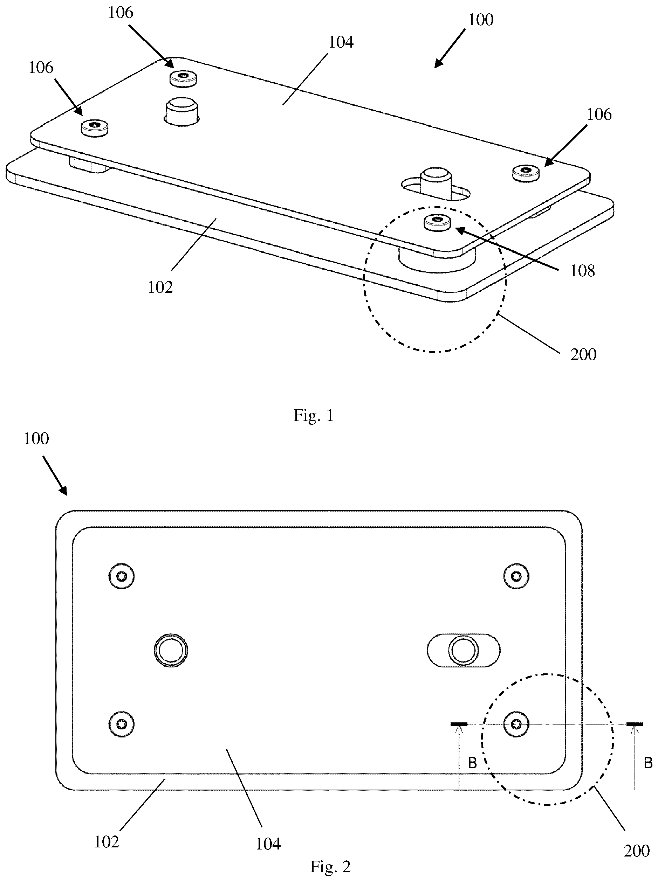

Figs. 1 to 4 illustrate a display system 100, particularly components of a display system 100 on which a display module (not shown) is mounted. The display system 100 includes a first component 102 and a second component 104. The display panel may be mounted on the first component 102 and the second component 104 may be mounted on the vehicle (not shown).

The first component 102 and the second component 104 may include a number of joining locations 106, 108 at which the components 102, 104 are joined. Due to manufacturing defects and/or selection of material of the components 102, 104, the joining locations may have multiple planes, which affects flatness of the components 102, 104 on which the display panel is mounted. Therefore, a tolerance compensation is required for maintaining the flatness of the components 102, 104 such that the display panel may be mounted on the same plane. The tolerance compensation ensures clear viewing on the display panel since the flatness is maintained. Due to this, the vibration effect on the display panel may also be minimized. It is to be understood that the tolerance compensation system 200 may not be limited to a display system of a vehicle and may be used to join any two or more components which require tolerance compensation.

In an illustrated embodiment as shown in Fig. 1, the display system 100 may comprises four joining locations 106, 108. Three of the joining locations 106 may lie on the same plane, and the fourth joining location 108 may not lie on the same plane as the other three joining locations 106. Therefore, the tolerance compensation system 200 is required for obtaining the flatness of the second component 104 with respect to the first component 102. The tolerance compensation system 200 may be used at one or more joining points of the components 102, 104, where a tolerance is required to be provided between the first component 102 and the second component 104.

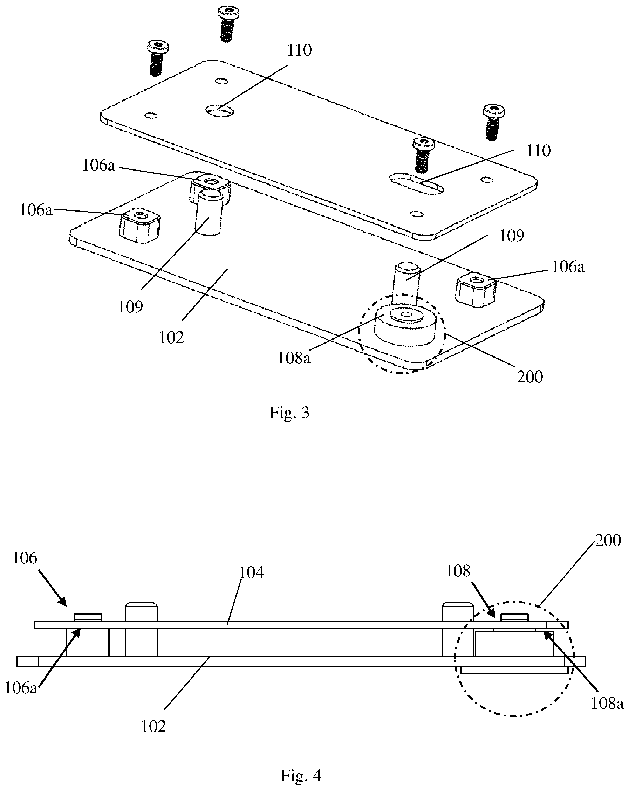

Fig. 3 is an exploded view of the display system 100. The first component 102 includes four joining faces 106a and 108a. The joining faces 106a may lie on the same plane such that the second component 104 abuts the joining faces 106a of the first component 102. The joining face 108a may not lie on the same plane as the joining faces 106a, and hence the tolerance compensation system 200 is used at the joining location 108. As shown in Fig. 4, the joining face 106a directly touches the second component 104, and the joining face 108a may be spaced apart from the second component 104. Therefore, the tolerance compensation 200 may be used for maintaining the flatness of the second component 104 and to compensate the gap between the joining face 108a and the second component 104.

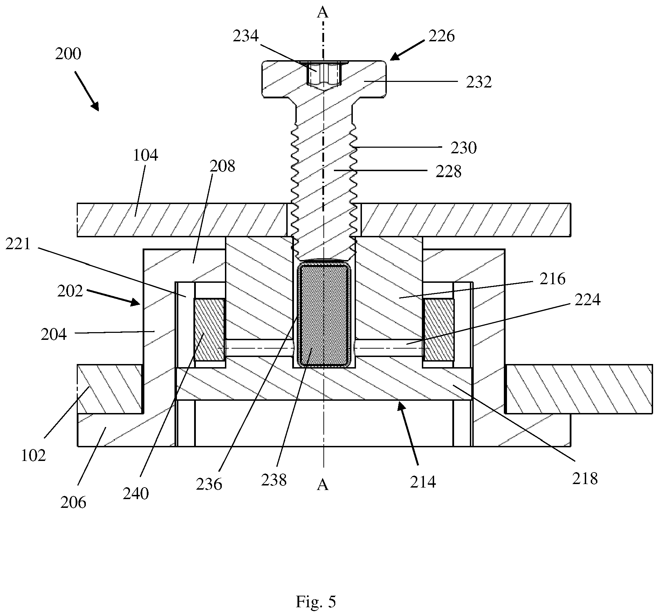

Fig. 5 illustrates the sectional view along a section line B-B of the tolerance compensation system 200 of Fig. 2. The tolerance compensation system 200 comprises a compensator housing 202. The compensator housing 202 is configured to be fixed on the first component 102. The tolerance compensation system 200 further comprises a swimming bolt 214 fitted into the compensator housing 202. The tolerance compensation system 200 further comprises a glue tank 236 filled with glue 238. The glue tank 236 is provided inside the swimming bolt 214. In another embodiment, the glue 238 is directly provided inside the swimming bolt 214. The tolerance compensation system 200 further comprises a screw 226 for fixing the second component 104 with the swimming bolt 214. The screw 226 is configured to burst the glue tank 236 and/or compress the glue 23 when tightened. As a result, the glue flows out of the glue tank 236 to join the compensator housing 202 and the swimming bolt 214. Fig. 5 shows a state of the tolerance compensation system 200 when the screw 226 is not tightened.

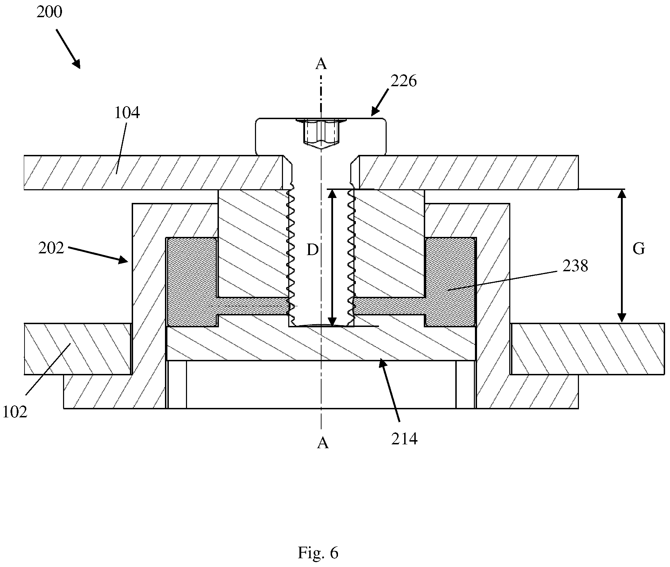

Fig. 6 illustrates the tolerance compensation when the screw 226 is tightened and the glue tank 236 is burst and the glue 238 is in contact with the compensator housing 202 and the swimming bolt 214. The tolerance compensation system 200 will now be described in more detail.

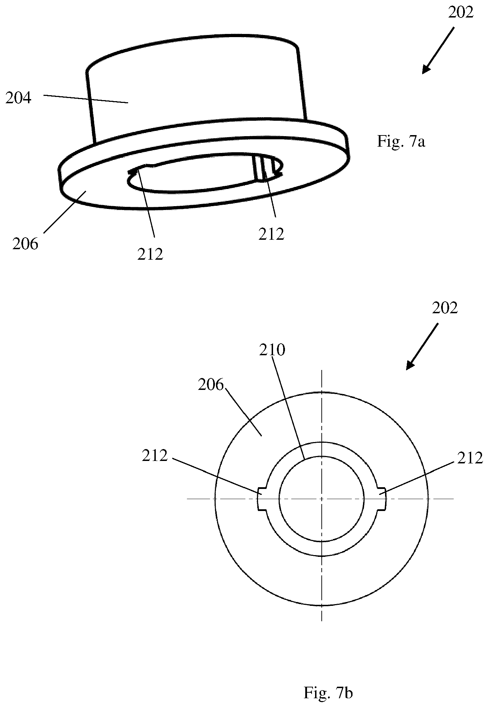

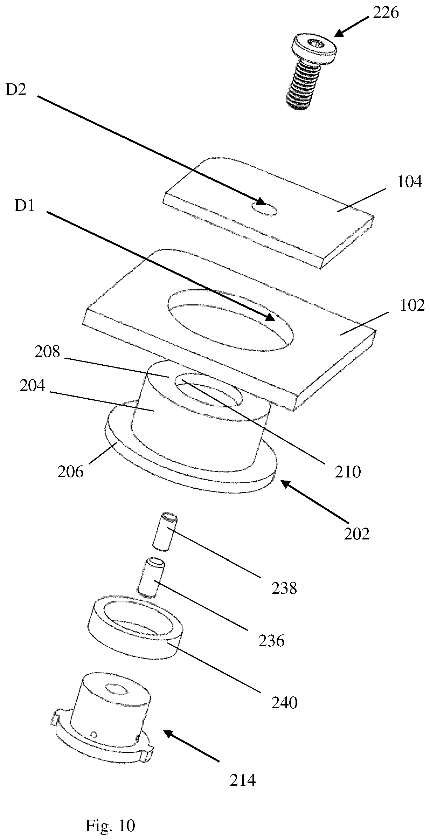

Referring to Fig. 5 and Figs. 7a-7b, the compensator housing 202 comprises a wall 204, a stub end 206 and a bolt end 208. The stub end 206 of the compensator housing 202 is configured to abut the first component 102. In the illustrated embodiment, the wall 204 of the compensator housing 202 may be cylindrical. The first component 102 has a hole of diameter D1 (shown in Fig. 10) and the wall 204 of the compensator housing 202 has a diameter which is configured to tightly fit into the hole of the first component 102 forming a seal between the first component 102 and the compensator housing 202. In another embodiment, the wall 204 of the compensator housing may be a non-cylindrical wall such a square or hexagonal shaped wall, and the hole of the first component may be shaped based on the shape of the wall 204 of the compensator housing 202. The bolt end 208 of the compensator housing 202 has a hole 210 (also shown in Fig. 10) through which the swimming bolt 214 is inserted. The wall 204 of the compensator housing 202 has at least one groove 212 (shown in Figs. 7a and 7b) positioned on the inner side of the wall 204. The at least one groove 212 is provided at least partially on the inner side of the wall 204 for restricting the movement between the compensator housing 202 and the swimming bolt 214.

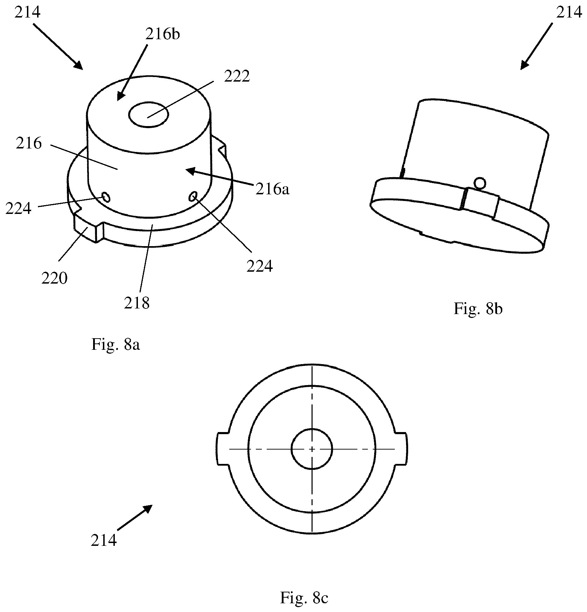

Referring to Fig. 5 and Figs. 8a - 8c, the swimming bolt 214 comprises a body 216 having an axis A-A and a head portion 218. The body 216 of the swimming bolt has a first surface 216a and a second surface 216b. The first surface 216a of the body 216 is configured to fit into the hole 210 of the compensator housing 202 forming a seal between the compensator housing 202 and the swimming bolt 214. The second surface 216b of the swimming bolt 214 is configured to abut the second component 104. The head portion 218 of the swimming bolt 214 is configured to sealably touch the inner portion of the wall 204 of the compensator housing 202. The head portion 218 further comprises at least one protrusion 220. The at least one protrusion 220 is configured to be inserted inside the at least one groove 212 of the compensator housing 202. This way the rotation between the swimming bolt 214 and the compensator housing 202 about the axis A-A. The diameter of the body 216 of the swimming bolt 214 may be less than the diameter of the inner side of the wall 204 of the compensator housing 202 such that a space 221 is enclosed between the swimming bolt 214 and the compensator housing 202. The swimming bolt 214 further comprises a threaded hole 222 along the axis A-A from the second surface 216b upto a depth D (shown in Fig. 6). The glue tank 236 is placed inside the threaded hole 222 of the swimming bolt 214. The glue tank 236 is filled with the glue 238. In another embodiment, the glue 238 is directly placed inside the threaded hole 222 of the swimming bolt 214 without using the glue tank 236. The swimming bolt 214 further comprises at least one channel 224 configured between the threaded hole and the first surface 216a.. The at least one channel 224 is configured to connect the threaded hole 222 of the swimming bolt 214 and the space 221 between the swimming bolt 214 and the compensator housing 202. The threaded hole 222 of the swimming bolt 214 is configured to receive the screw 226.

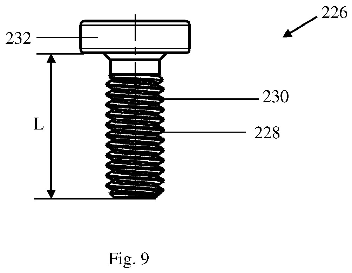

Referring to Fig. 9 and Fig. 5, the screw 226 comprises a body 228 having length L and a head 232. The body 228 of the screw 236 has external threads 230 which is configured to be tightened inside the threaded hole 222 of the swimming bolt 214. The second component 104 of the display system 100 is configured between the swimming bolt 214 and the head 232 of the screw 226. The head 232 of the screw 226 is configured to fix the second component 104 with the swimming bolt 214. The head 232 further comprises a tool groove 234 for inserting a screwing tool (not shown) for tightening the screw 226 inside the threaded hole 222 of the swimming bolt 214. The screw 226 is configured to move towards the glue tank 236 when tightened and the glue tank 236 gets compressed. In the embodiment of glue 238 without the glue tank, the screw 226, when tightened, pushes the glue 238 to fill the space 221 between the swimming bolt 214 and the compensator housing 202.

Referring to Figs. 5 and 6, the glue tank 236 is configured to burst on compression, and the glue 238 is configured to flow through the at least one channel 224 to reach the space 221 between the swimming bolt 214 and the compensator housing 202. The glue 238 is cured after reaching the space 221 to create an adhesive joint between the swimming bolt 214 and the compensator housing 202. In an embodiment, the glue 238 may be one material glue, that is to say, the glue 238 may not require an additional material for providing the adhesive property. In another embodiment, the glue 238 may have a first glue material and a second glue material 240. The first glue material may be stored in the glue tank 236 and the second glue material 240 may be stored in the space 221, such that when the first glue material comes in contact with the second glue material 240, the combination of the first glue material and the second glue material 240 provides the adhesive property to the glue 238. In another embodiment, the second glue material 240 may enhance curing time for adhesive bond between the compensator housing 202 and the swimming bolt 214. In the embodiment of one material glue, the second glue material 240 may be a glue accelerator which may not provide adhesive property to the glue but may enhance the curing time for the adhesive bond.

Referring to Fig. 6, which illustrates the first component 102 and the second component 104 with tolerance compensation system 200 in fully assembled state. As shown in the assembled view, a gap G is maintained between the first component 102 and the second component 104 for compensating tolerance between the first component 102 and the second component 104. The gap G may be adjusted based on the required tolerance between the first component 102 and the second component 104. For each joining point of the first component 102 and the second component 104, the gap G may be varied for obtaining the flatness. For each joining point, a tolerance compensation system 200 according to the present disclosure may be used, each tolerance compensation system 200 may have different values of the gap G.

During assembly of the first component 102 and the second component 104, the movement of the first component (102) and the second component (104) may be restricted by fixing the first component (102) and the second component (104) on a supporting jig (not shown). Alternatively, the movement of the first component 102 and the second component 104 may be restricted by providing additional design features in the first component 102 and the second component 104, shown in Fig. 3. Referring to Fig. 3, the first component 102 includes at least one centering part 109 and the second component 104 includes at least one centering hole 110. The at least one centering part 109 is configured to be inserted into the at least one centering hole 110 of the second component 104 for restricting the movement of the first component 102 and the second component 104. In the illustrated embodiment shown in Fig. 3, the at least one centering part 109 includes two centering parts 109, and the at least one centering hole 110 includes one circular hole and one slotted hole. In some alternate embodiment, the additional design feature (not shown) of the first component 102 and the second component 104 may include ribs for supporting the first component 102 and the second component 104 during assembly.

The present disclosure also refers to a method for joining the first component 102 and the second component 104 with tolerance compensation. Fig. 8, which illustrates an exploded view of the tolerance compensation system 200, will now be used to describe the method. The method comprises a step of disposing the compensator housing 202 on the first component 102. The method further comprises a step of inserting the swimming bolt 214 inside the hole 210 of the compensator housing 202. The method further comprises a step of placing the second component 104 on the second surface 216b of the swimming bolt 214, wherein the glue tank 236 having the glue 238 or directly the glue 238 without the glue tank is placed inside the threaded hole 222 of the swimming bolt 214. The method further comprise a step of inserting the screw 226 having external threads 230 and length (L) inside the threaded hole 222 of the swimming bolt 214 and tightening the screw 226 by using the screwing tool, wherein the screwing tool is inserted in the groove 234 of the screw 226. The method further comprises a step of compressing and bursting the glue tank 236 by the screw 226 when the screw 226 is tightened inside the threaded hole 222 of the swimming bolt 214. The method further comprises a step of allowing the glue 238 to flow through the channel 224 configured within the swimming bolt 214 to fill the space 221 between the swimming bolt 214 and the compensator housing 202. The method further comprises a step of curing the glue 238 to obtain the adhesive joint between the swimming bolt 214 and the compensator housing 202. The method further comprises a step of providing a supporting jig (not shown) for providing rigidity to the first component 102, the second component 104, the compensator housing 202 and the swimming bolt 214 during the curing step. The supporting jig may be provided to rigidly support the system and ease the curing step and to obtain a desired value of the gap G between the first component 102 and the second component 104.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

**Reference Signs**
- 100:: display system
- 102:: first component
- 104:: second component
- 106:: joining location
- 106a:: joining face
- 108a:: joining face
- 109:: centering part
- 110:: centering hole
- 200:: tolerance compensation system
- 202:: compensator housing
- 204:: wall of compensator housing
- 206:: stub end of compensator housing
- 208:: bolt end of compensator housing
- 210:: hole of compensator housing
- 212: at least one groove of compensator housing
- 214:: swimming bolt
- 216:: body of swimming bolt
- 216a:: first surface of swimming bolt
- 216b:: second surface of swimming bolt
- 218:: head portion of swimming bolt
- 220:: at least one protrusion of swimming bolt
- 221:: space between swimming bolt and compensator housing
- 222:: threaded hole of swimming bolt
- 224:: at least one channel of swimming bolt
- 226:: screw
- 228:: body of screw
- 230:: thread of screw
- 232:: head of screw
- 234:: groove of screw
- 236:: glue tank
- 238:: glue
- 240:: second glue material
- A-A:: axis of swimming bolt
- B-B:: section line
- L:: length of screw
- D:: depth of threaded hole
- D1:: diameter of hole of first component
- D2:: diameter of hole of second component
- G:: gap between first component and second component

## Claims

1. A tolerance compensation system (200) for joining a first component (102) and a second component (104), the tolerance compensation system (200) comprising:
- a compensator housing (202) disposed on the first component (102), wherein the compensator housing (202) comprises a wall (204), a stub end (206) and a bolt end (208), wherein the stub end (206) is configured to fix the first component (102) with the compensator housing (202), and the bolt end (208) has a hole (210) for inserting a swimming bolt (214) inside the compensator housing (202);
- the swimming bolt (214) comprising:
∘ a body (216) having a first surface (216a) and a second surface (216b), wherein the body (216) of the swimming bolt (214) is configured to be inserted inside the hole (210) of the compensator housing (202) forming a seal between the body (216) and the compensator housing (202), and wherein the second surface (216b) of the swimming bolt (214) is configured to abut the second component (104),
∘ a head portion (218) configured to sealably touch the wall (204) of the compensator housing (202), and
∘ a threaded hole (222); and
- a screw (226) having external threads (230) configured to fix the second component (104) and the swimming bolt (214),
wherein a glue tank (236) filled with a glue (238) or a glue (238) is provided in the threaded hole (222) of the swimming bolt (214), wherein the glue (238) is configured to be filled into a space 221, and wherein a gap (G) is maintained for compensating tolerance between the first component (102) and the second component (104).

2. The tolerance compensation system (200) as claimed in claim 1, wherein the wall (204) of the compensator housing (202) has at least one groove (212) and the swimming bolt (214) has at least one protrusion (220) positioned on the head portion (218), wherein the at least one protrusion (220) of the swimming bolt (214) is configured to be inserted in the at least one groove (212) of the compensator housing (202).

3. The tolerance compensation system (200) as claimed in claim 1, wherein the swimming bolt (214) comprises at least one channel (224) configured between the threaded hole (222) and the first surface (216a) of the swimming bolt (214).

4. The tolerance compensation system (200) as claimed in claim 3, wherein the glue (238) is configured to flow through the at least one channel (224) and form an adhesive joint between the swimming bolt (214) and the compensator housing (202).

5. The tolerance compensation system (200) as claimed in claim 1, wherein the movement of the first component (102) and the second component (104) is restricted by fixing the first component (102) and the second component (104) on a supporting jig.

6. The tolerance compensation system (200) as claimed in claim 1, wherein the first component (102) comprises at least one centering part (109) configured to be inserted in at least one centering hole (110) of the second component (104) for restricting the movement of the first component (102) and the second component (104).

7. The tolerance compensation system (200) as claimed in claim 1, further comprises a second glue material (240) disposed between the swimming bolt (214) and the compensator housing (202).

8. The tolerance compensation system (200) as claimed in claim 1 wherein the screw (226) comprises: a body (228) having length (L), and a head (232) having a tool groove (234), wherein the tool groove (234) of the screw (226) is configured to receive a screwing tool.

9. The tolerance compensation system (200) as claimed in claim 1, wherein the head (232) of the screw (226) is configured to fix the second component (104) and the swimming bolt (214) when the screw (226) is tightened into the swimming bolt (214).

10. The tolerance compensation system 200 as claimed in claim 1, wherein the screw (226) is configured to compress and push the glue (238) into the space (221) when tightened.

11. The tolerance compensation system (200) as claimed in claim 1, wherein the first component (102) has at least one hole for inserting the compensator housing (202) into the first component (102).

12. The tolerance compensation system (200) as claimed in claim 1, wherein the second component (104) has at least one hole in which the screw (226) is inserted for fixing the second component (104) with the swimming bolt (214).

13. A method of joining a first component (102) and a second component (104) with tolerance compensation, wherein the method comprises:
- disposing a compensator housing (202) on the first component (102);
- inserting a swimming bolt (214) inside a hole (210) of the compensator housing (202),
- placing the second component (104) on a second surface (216b) of the swimming bolt (214), wherein the swimming bolt (214) has a threaded hole (222), and wherein a glue tank (236) having glue (238) or a glue (236) is placed inside the threaded hole (222) of the swimming bolt (214);
- inserting a screw (226) inside the threaded hole (222) of the swimming bolt (214) and tightening the screw (226);
- bursting the glue tank (236) and compressing the glue (236) or compressing the glue (236) by the screw (226) when the screw (226) is tightened inside the threaded hole (222) of the swimming bolt (214);
- allowing the glue (238) to flow through at least one channel (224) configured within the swimming bolt (214) to fill a space (221) between the swimming bolt (214) and the compensator housing (202);
- curing the glue (238) to obtain an adhesive joint between the swimming bolt (214) and the compensator housing (202),
wherein a gap (G) is maintained for compensating tolerance between the first component (102) and the second component (104).

14. The method as claimed in claim 13, wherein the method comprises providing a supporting jig which provides rigidity to the first component (102), the compensator housing (202), the swimming bolt (214) and the second component (104) during the curing step.

15. The method as claimed in claim 13, wherein the method further comprises step of providing a second glue material (240) between the swimming bolt (214) and the compensator housing (202).
